# EUROPEAN PATENT SPECIFICATION

(11) **EP 4 145 732 B1**
(45) Date of publication and mention of the grant of the patent: **11.11.2026**
(21) Application number: 21194452.5
(22) Date of filing: 02.09.2021
(51) Int. Cl.: H04L 1/00, H04W 84/18

(54) **DEVICE AND METHOD FOR COOPERATIVE RELAYING OF VOICE TRAFFIC IN MOBILE AD-HOC NETWORKS**
VORRICHTUNG UND VERFAHREN ZUR KOOPERATIVEN WEITERLEITUNG VON SPRACHVERKEHR IN MOBILEN AD-HOC-NETZWERKEN
DISPOSITIF ET PROCÉDÉ DE RELAIS COOPÉRATIF DE TRAFIC VOCAL DANS DES RÉSEAUX AD-HOC MOBILES

(43) Date of publication of application: 08.03.2023
(73) Proprietor: Rohde & Schwarz GmbH & Co. KG, 81671 München (DE)
(72) Inventor: Baessler, Andreas, 85253 Eisenhofen (DE)
(74) Representative: Novagraaf Group

(56) References cited:
- WO-A1-2013/069015
- US-A1- 2007 071 030
- US-A1- 2013 100 942
- US-B1- 7 103 371
- WEISS, M. ET AL FROM RAFAEL,DIVISION NCW.: "An Innovative SDR Architecture and MANET with Simultaneous Multiple Channel Reception", 2012 WIRELESS INNOVATION FORUM EUROPEAN CONFERENCE ON COMMUNICATIONS TECHNOLOGIES AND SOFTWARE DEFINED RADIO BRUSSELS (BELGIUM), 29 June 2012 (2012-06-29), pages 1 - 41, XP055892171, Retrieved from the Internet <URL:https://www.wirelessinnovation.org/assets/Proceedings/2012Europe/2012-europe-a-6.2-weiss-presentation.pdf> [retrieved on 20220215]

## Description

### Technical Field

The present disclosure relates generally to the field of mobile ad-hoc networks (MANETs), and more particularly to a software-defined radio (SDR) device and a method of operating the same.

### Background Art

In many of today's radio methods for MANETs, packets carrying encoded vocal expression (i.e., voice traffic) are/is being forwarded/relayed by dynamically designated relay nodes.

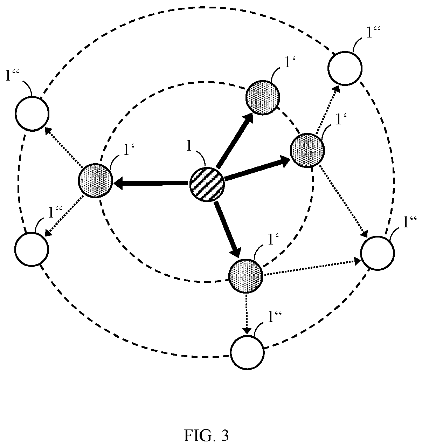

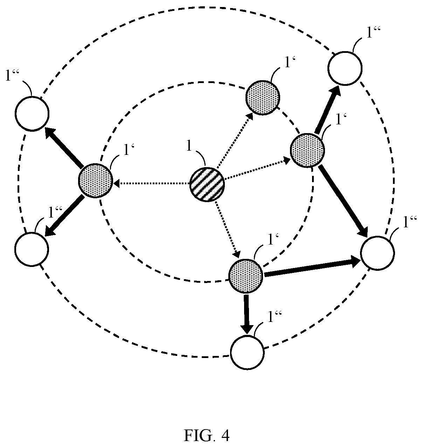

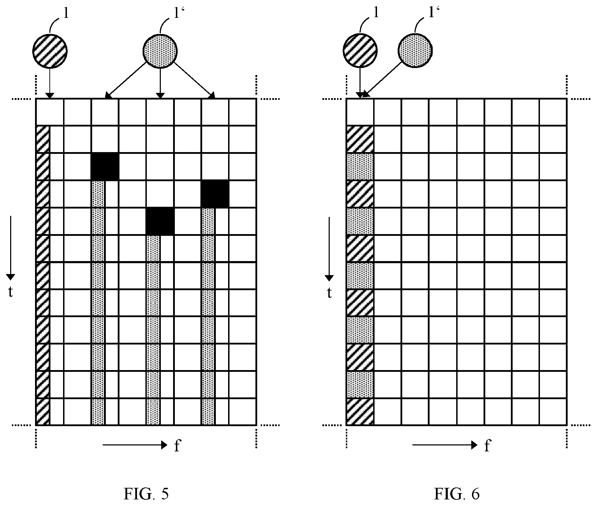

FIG. 3 illustrates an example of relaying of such delay-sensitive traffic in accordance with prior art, wherein the MANET comprises a plurality of frequency-division multiple access (FDMA) channels, respectively being subdivided into uniform TDMA slots. In this example, the relaying takes place in accordance with the two phases illustrated in FIGs. 3 and 4, respectively. In the first phase (FIG. 3), a sending device 1 transmits/broadcasts voice traffic to its *1*-hop neighbor devices 1'. In the second phase (FIG. 4), after reception of the voice traffic from the sending device 1, the *1*-hop neighbor devices 1' reserve (as is indicated by black boxes in FIG. 5) and use respective frequency channels at least partially for relaying the received voice traffic to 2-hop neighbor devices 1" of the sending device 1.

As these reservations are dynamic processes which depend on the channels' utilization, a forwarding delay is generally variable. However, users expect a deterministic delay - also for voice traffic.

Further, as the reservation is per relay node, a system capacity of the MANET reduces per relay node. The paper "An Innovative SDR Architecture and MANET with Simultaneous Multiple Channel Reception",2012 Wireless Innovation Forum European Conference On Communications Technologies and Software Defined Radio Brussels (Belgium), 29 June 2012, by Weiss, M. ET AL from Rafael, Division Ncw, discloses a multichannel TDMA MANET for SDR devices. Such SDR devices transmit and receive over multiple available frequencies, each with a bandwidth of 1Mb/s. Delay-sensitive traffic like video and PTT voice is assigned to dedicated channels and time slots, separated from delay-insensitive messages.

### Summary

It is an objective of the present disclosure to overcome these and other drawbacks. It is a specific objective to improve a capacity efficiency and delay determinism of MANETs.

This is achieved by the features of the attached claims.

### Advantageous Effects

In accordance with the present disclosure,
a) the dynamically designated relay nodes use at least one FDMA channel which is statically reserved (i.e., dedicated) for transmission of delay-sensitive traffic such as voice traffic;
b) the at least one dedicated channel comprises a plurality of TDMA slots of equal duration, wherein a sending SDR device uses a first slot of the plurality of TDMA slots for transmission of delay-sensitive traffic, and a relaying SDR device which receives the delay-sensitive traffic in a particular (e.g., first) slot of the plurality of TDMA slots uses an immediately succeeding (e.g., second) slot of the plurality of TDMA slots for relaying/forwarding the delay-sensitive traffic ("cooperative relaying/forwarding");
c) a sending SDR device buffers its delay-sensitive traffic for transmission in the first slot of the plurality of TDMA slots for up to the TDMA slot duration, which may be dimensioned to allow for a continuous output of the vocal expression at a receiving SDR device;

This entails the following benefits:
a) the static reservation has the effect that respective relay nodes do not need to reserve a frequency channel separately, so that a system capacity of the MANET becomes independent of the number of relay nodes, collisions of voice and data traffic are avoided, and shorter and more deterministic delays are obtained;
b) the cooperative relaying/forwarding has the effect that delay is reduced and becomes deterministic; and
c) the buffering improves a channel utilization and introduces only a finite defined delay, while enabling continuous output of the vocal expression at a receiving SDR device; the buffering further enables an adaptation of a transception rate of the SDR device, so that a channel access becomes more efficient and simpler to implement.

Advantageously, the technical effects and advantages described above in relation with the SDR device equally apply to the method of operating the same having corresponding features.

### Brief Description of Drawings

The above-described aspects and implementations will now be explained with reference to the accompanying drawings, in which the same or similar reference numerals designate the same or similar elements.

The drawings are to be regarded as being schematic representations, and elements illustrated in the drawings are not necessarily shown to scale. Rather, the various elements are represented such that their function and general purpose become apparent to those skilled in the art.
- FIG. 1: illustrates an SDR device in accordance with the present disclosure for a MANET;
- FIG. 2: illustrates a method in accordance with the present disclosure of operating the SDR device of FIG. 1;
- FIG. 3: illustrates a first phase of relaying delay-sensitive traffic;
- FIG. 4: illustrates a second phase of the relaying of the delay-sensitive traffic;
- FIG. 5: illustrates an example of relaying of delay-sensitive traffic in accordance with prior art; and
- FIG. 6: illustrates an example of relaying of delay-sensitive traffic in accordance with the present disclosure.

### Detailed Descriptions of Drawings

In the following description, reference is made to the accompanying drawings, which form part of the disclosure, and which show, by way of illustration, specific aspects of embodiments of the invention or specific aspects in which embodiments of the present invention may be used. It is understood that embodiments of the invention may be used in other aspects and comprise structural or logical changes not depicted in the figures. The following detailed description, therefore, is not to be taken in a limiting sense, and the scope of the present invention is defined by the appended claims.

For instance, it is understood that a disclosure in connection with a described method may also hold true for a corresponding apparatus or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

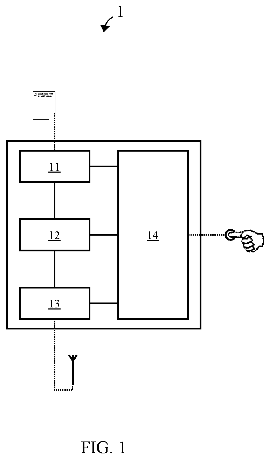

FIG. 1 illustrates an SDR device 1 ,1', 1" in accordance with the present disclosure for a MANET.

The MANET comprises a plurality of FDMA channels, one of which is dedicated for delay-sensitive traffic and comprises a periodically recurring plurality of TDMA slots of equal duration as shown in FIG. 6.

A quantity of TDMA slots in the plurality may correspond to a maximum hop count for a communication on the MANET.

In particular, the maximum hop count for the communication on the MANET may comprise two hops.

The SDR device 1 ,1', 1" comprises an encoder 11 configured to encode delay-sensitive traffic in accordance with a maximum codec bit rate.

In particular, the delay-sensitive traffic may comprise encoded vocal expression (i.e., voice traffic). The SDR device 1 ,1', 1" further comprises an adapter 12 configured to buffer the encoded traffic in accordance with a maximum duration corresponding to the TDMA slot duration.

The TDMA slot duration may be in accordance with a continuous output of the vocal expression at a receiving SDR device 1 ,1', 1".

In particular, the TDMA slot duration slot may comprise less than 150 ms, and preferably 135 ms. The SDR device 1 ,1', 1" further comprises a transceiver 13 configured to transmit the buffered traffic in a first slot of the plurality of TDMA slots.

The SDR device 1 ,1', 1" further comprises a processor 14 configured to detect an actuation by a user of the software-defined radio, SDR, device 1 ,1', 1", and operate the encoder, the adapter and the transceiver in response to the detected actuation.

The detected actuation may comprise an actuation of a PTT knob of the SDR device 1 ,1', 1".

According to the claimed invention, the processor 14 is further configured to adapt a data rate of the transceiver in accordance with an amount of the buffered traffic.

The foregoing configuration is especially suited for SDR devices 1 ,1', 1" originating radio communication. For SDR devices 1 ,1', 1" to relay radio communication, the transceiver 13 may further be configured to receive transmitted traffic in a particular slot of the plurality of TDMA slots, and transmit the received traffic in a further slot of the plurality of TDMA slots immediately succeeding the particular slot; and the processor 14 may further be configured to decrement a TTL counter included in the received traffic.

For example, the particular slot may comprise the first slot of the plurality of TDMA slots; and the further slot may comprise a second slot of the plurality of TDMA slots. For example, the particular slot may comprise the second slot of the plurality of TDMA slots; and the further slot may comprise a third slot of the plurality of TDMA slots, and so on.

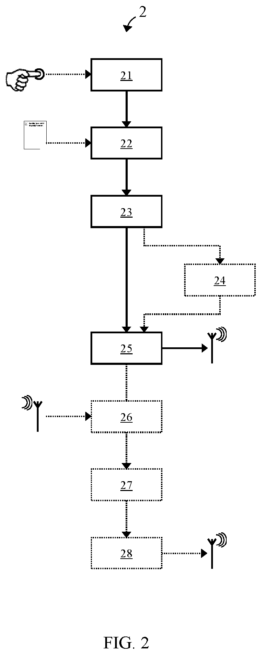

FIG. 2 illustrates a method 2 in accordance with the present disclosure of operating the SDR device 1 ,1', 1" of FIG. 1.

The MANET comprises a plurality of FDMA channels, one of which is dedicated for delay-sensitive traffic and comprises a periodically recurring plurality of TDMA slots of equal duration as shown in FIG. 6.

A quantity of TDMA slots in the plurality may correspond to a maximum hop count for a communication on the MANET.

In particular, the maximum hop count for the communication on the MANET may comprise two hops.

The method 2 comprises detecting 21 an actuation by a user (as indicated by the inbound arrow) of the SDR device 1 ,1', 1".

In particular, the detected actuation may comprise an actuation of a PTT knob of the SDR device 1 ,1', 1".

The method 2 further comprises, in response to the detected actuation, encoding 22 delay-sensitive traffic in accordance with a maximum codec bit rate (as indicated by the inbound arrow).

In particular, the delay-sensitive traffic may comprise encoded vocal expression.

The method 2 further comprises buffering 23 the encoded traffic in accordance with a maximum duration corresponding to the TDMA slot duration.

The TDMA slot duration may be in accordance with a continuous output of the vocal expression at a receiving SDR device 1 ,1', 1".

In particular, the TDMA slot duration slot may comprise less than 150 ms, and preferably 135 ms.

According to the claimed invention, the method 2 further comprises adapting 24 a transception rate of the transceiver in accordance with an amount of the buffered traffic.

The method 2 further comprises transmitting 25 the buffered traffic (as indicated by the outbound arrow) in a first slot of the plurality of TDMA slots.

The foregoing configuration is especially suited for SDR devices 1 ,1', 1" originating radio communication. For SDR devices 1 ,1', 1" to relay radio communication, the method 2 may further comprise receiving 26 traffic (as indicated by the inbound arrow) in a particular slot of the plurality of TDMA slots; decrementing 27 a TTL counter included in the received traffic; and transmitting 28 the received traffic (as indicated by the outbound arrow) in a further slot of the plurality of TDMA slots immediately succeeding the particular slot.

For example, the particular slot may comprise the first slot of the plurality of TDMA slots; and the further slot may comprise a second slot of the plurality of TDMA slots. For example, the particular slot may comprise the second slot of the plurality of TDMA slots; and the further slot may comprise a third slot of the plurality of TDMA slots, and so on.

FIG. 6 illustrates an example of relaying of delay-sensitive traffic in accordance with the present disclosure, wherein the MANET comprises a plurality of FDMA channels, one of which is dedicated for delay-sensitive traffic and comprises a periodically recurring plurality of TDMA slots of equal duration as shown in FIG. 6.

In the particular example, a quantity of TDMA slots in the plurality corresponds to a maximum hop count for a communication on the MANET, which comprises two hops. In other words, every first slot of the periodically recurring two TDMA slots is dedicated for transmission by the sending SDR device 1, and every second slot of the periodically recurring two TDMA slots is dedicated for relaying traffic received by *1*-hop neighbors 1' of the sending SDR device 1 to *2*-hop neighbors 1" of the sending SDR device 1.

As such, also in this example the relaying takes place in accordance with the two phases illustrated in FIGs. 3 and 4, respectively.

The processor 14 is configured to detect an actuation by a user of the SDR device 1 ,1', 1" such as an actuation of a PTT knob, and operate the encoder 11, the adapter 12 and the transceiver 13 in response to the detected actuation.

The encoder 11, e.g. a vocoder, is configured to encode vocal expression (i.e., voice traffic) in accordance with a maximum codec bit rate.

The adapter 12, e.g. a voice adapter, is configured to buffer/aggregate the encoded voice traffic in accordance with a maximum duration corresponding to the TDMA slot duration. The buffer content is provided to a medium access protocol (MAC) interface in intervals of two times the TDMA slot duration (in accordance with the aforementioned quantity of two TDMA slots in the plurality), and has a maximum duration corresponding to the TDMA slot duration. In particular, the TDMA slot duration may be designed in accordance with a continuous output of the vocal expression at a receiving SDR device 1 ,1', 1".

The sending SDR device 1 and its *1*-hop neighbor SDR devices 1 then take turns in using the preconfigured TDMA slots. More specifically, in the first phase (FIG. 3), the sending SDR device 1 transmits/broadcasts voice traffic to its *1*-hop neighbor nodes 1'. By contrast to the example of FIG. 5, the sending SDR device 1 may take advantage of the first TDMA slots preconfigured in the dedicated FDMA channel. In the second phase (FIG. 4) , after reception of the voice traffic from the sending SDR device 1, the *1*-hop neighbor SDR devices 1' of the sending SDR device 1 may take advantage of the second TDMA slots preconfigured in the dedicated FDMA channel for instantaneous relaying of the received voice traffic to *2*-hop neighbor SDR devices 1" of the sending SDR device 1 ("cooperative relaying") without any dynamic reservation.

Each packet of the delay-sensitive traffic may comprise a TTL counter, which may be decremented per hop in order to delimit a scope of the relaying within the MANET.

The present disclosure has been described in conjunction with various embodiments as examples as well as implementations. However, other variations can be understood and effected by those persons skilled in the art. The scope of protection is defined by the attached claims.

## Claims

1. A software-defined radio, SDR, device (1 ,1', 1") for a mobile ad-hoc network, MANET,
the MANET comprising
a plurality of frequency-division multiple access, FDMA, channels, one of which being dedicated for delay-sensitive traffic and comprising a periodically recurring plurality of time-division multiple access, TDMA, slots of equal duration;
the SDR device (1 ,1', 1") comprising
an encoder (11) configured to
- encode delay-sensitive traffic in accordance with a maximum codec bit rate;
an adapter (12) configured to
- buffer the encoded traffic in accordance with a maximum duration corresponding to the TDMA slot duration;
a transceiver (13) configured to
- transmit the buffered traffic in a first slot of the plurality of TDMA slots; and
a processor (14) configured to
- detect an actuation by a user of the software-defined radio, SDR, device (1 ,1', 1");
- operate the encoder, the adapter and the transceiver in response to the detected actuation; and
- adapt a data rate of the transceiver in accordance with an amount of the buffered traffic.

2. The device (1 ,1', 1") of claim 1,
the transceiver (13) further configured to
- receive transmitted traffic in a particular slot of the plurality of TDMA slots; and
- transmit the received traffic in a further slot of the plurality of TDMA slots immediately succeeding the particular slot; and
the processor (14) further configured to
- decrement a time-to-live, TTL, counter included in the received traffic.

3. A method (2) of operating a software-defined radio, SDR, device (1 ,1', 1") for a MANET,
the MANET comprising
a plurality of frequency-division multiple access, FDMA channels, one of which being dedicated for delay-sensitive traffic and comprising a periodically recurring plurality of time-division multiple access, TDMA, slots of equal duration;
the method (2) comprising:
- detecting (21) an actuation by a user of the SDR device (1 ,1', 1");
- in response to the detected actuation, encoding (22) delay-sensitive traffic in accordance with a maximum codec bit rate;
- buffering (23) the encoded traffic in accordance with a maximum duration corresponding to the TDMA slot duration;
- adapting (24) a data rate of the transceiver in accordance with an amount of the buffered traffic; and
- transmitting (25) the buffered traffic in a first slot of the plurality of TDMA slots.

4. The method (2) of claim 3, further comprising
- receiving (26) traffic in a particular slot of the plurality of TDMA slots;
- decrementing (27) a time-to-live, TTL, counter included in the received traffic; and
- transmitting (28) the received traffic in a further slot of the plurality of TDMA slots immediately succeeding the particular slot.

5. The device (1 ,1', 1") of claim 2 or the method (2) of claim 4,
the particular slot comprising the first slot of the plurality of TDMA slots; and
the further slot comprising a second slot of the plurality of TDMA slots.

6. The device (1 ,1', 1") of any one of the claims 1, 2 and 5, or the method (2) of any one of the claims 3 to 5,
the delay-sensitive traffic comprising encoded vocal expression.

7. The device (1 ,1', 1") of claim 6 or the method (2) of claim 6,
the TDMA slot duration being in accordance with a continuous output of the vocal expression at a receiving SDR device (1 ,1', 1").

8. The device (1 ,1', 1") of claim 7 or the method (2) of claim 7,
the TDMA slot duration slot comprising less than 150 ms, and preferably 135 ms.

9. The device (1 ,1', 1") of any one of the claims 1, 2 and 5 to 8, or the method (2) of any one of the claims 3 to 8,
the detected actuation comprising an actuation of a push-to-talk, PPT, knob of the SDR device (1 ,1', 1").

10. The device (1 ,1', 1") any one of the claims 1, 2 and 5 to 9, or the method (2) of any one of the claims 3 to 9,
a quantity of TDMA slots in the plurality corresponding to a maximum hop count for a communication on the MANET.

11. The device (1 ,1', 1") of claim 10 or the method (2) of claim 10,
the maximum hop count for the communication on the MANET comprising two hops.

## Patentansprüche

1. Software-Defined-Radio-Vorrichtung, SDR-Vorrichtung, (1, 1', 1") für ein mobiles Ad-hoc-Netzwerk, MANET, das MANET umfassend
eine Vielzahl von Frequenzmultiplex-Kanälen, FDMA-Kanälen, von denen einer für verzögerungsempfindlichen Verkehr dediziert ist und eine periodisch wiederkehrende Vielzahl von Zeitmultiplex-Schlitzen, TDMA-Schlitzen, gleicher Dauer umfasst;
die SDR-Vorrichtung (1, 1', 1") umfassend
einen Codierer (11), der konfiguriert ist, um
- verzögerungsempfindlichen Verkehr gemäß einer maximalen Codec-Bitrate zu codieren;
einen Adapter (12), der konfiguriert ist, um
- den codierten Verkehr gemäß einer maximalen Dauer, die der TDMA-Schlitz-Dauer entspricht, zu puffern;
einen Transceiver (13), der konfiguriert ist, um
- den gepufferten Verkehr in einem ersten Schlitz aus der Vielzahl von TDMA-Schlitzen zu übertragen; und
einen Prozessor (14), der konfiguriert ist, um
- eine Betätigung der Software-Defined-Radio-Vorrichtung, SDR-Vorrichtung, (1, 1', 1") durch einen Benutzer zu erkennen;
- den Codierer, den Adapter und den Transceiver als Reaktion auf die erkannte Betätigung zu betreiben und
- eine Datenrate des Transceivers gemäß einer Menge des gepufferten Verkehrs anzupassen.

2. Vorrichtung (1, 1', 1") nach Anspruch 1,
wobei der Transceiver (13) ferner konfiguriert ist, um
- übertragenen Verkehr in einem bestimmten Schlitz aus der Vielzahl von TDMA-Schlitzen zu empfangen und
- den empfangenen Verkehr in einem weiteren Schlitz aus der Vielzahl von TDMA-Schlitzen, der unmittelbar auf den bestimmten Schlitz folgt, zu übertragen; und
wobei der Prozessor (14) ferner konfiguriert ist, um
- einen im empfangenen Verkehr eingeschlossenen Time-to-Live-Zähler, TTL-Zähler, zu dekrementieren.

3. Verfahren (2) zum Betreiben einer Software-Defined-Radio-Vorrichtung, SDR-Vorrichtung, (1, 1', 1") für ein MANET, das MANET umfassend
eine Vielzahl von Frequenzmultiplex-Kanälen, FDMA-Kanälen, von denen einer für verzögerungsempfindlichen Verkehr dediziert ist und eine periodisch wiederkehrende Vielzahl von Zeitmultiplex-Schlitzen, TDMA-Schlitzen, gleicher Dauer umfasst;
das Verfahren (2) umfassend:
- Erkennen (21) einer Betätigung der SDR-Vorrichtung (1, 1', 1") durch einen Benutzer;
- als Reaktion auf die erkannte Betätigung, Codieren (22) von verzögerungsempfindlichem Verkehr gemäß einer maximalen Codec-Bitrate;
- Puffern (23) des codierten Verkehrs gemäß einer maximalen Dauer entsprechend der TDMA-Schlitz-Dauer;
- Anpassen (24) einer Datenrate des Transceivers gemäß einer Menge des gepufferten Verkehrs und
- Übertragen (25) des gepufferten Verkehrs in einem ersten Schlitz aus der Vielzahl von TDMA-Schlitzen.

4. Verfahren (2) nach Anspruch 3, ferner umfassend
- Empfangen (26) von Verkehr in einem bestimmten Schlitz aus der Vielzahl von TDMA-Schlitzen;
- Dekrementieren (27) eines im empfangenen Verkehr eingeschlossenen Time-to-Live-Zählers, TTL-Zählers; und
- Übertragen (28) des empfangenen Verkehrs in einem weiteren Schlitz aus der Vielzahl von TDMA-Schlitzen, der unmittelbar auf den bestimmten Schlitz folgt.

5. Vorrichtung (1, 1', 1") nach Anspruch 2 oder Verfahren (2) nach Anspruch 4,
wobei der bestimmte Schlitz den ersten Schlitz aus der Vielzahl von TDMA-Schlitzen umfasst und
der weitere Schlitz einen zweiten Schlitz aus der Vielzahl von TDMA-Schlitzen umfasst.

6. Vorrichtung (1, 1', 1") nach einem der Ansprüche 1, 2 und 5 oder Verfahren (2) nach einem der Ansprüche 3 bis 5,
wobei der verzögerungsempfindliche Verkehr codierten stimmlichen Ausdruck umfasst.

7. Vorrichtung (1, 1', 1") nach Anspruch 6 oder Verfahren (2) nach Anspruch 6,
wobei die TDMA-Schlitz-Dauer gemäß einer kontinuierlichen Ausgabe des stimmlichen Ausdrucks an einer empfangenden SDR-Vorrichtung (1, 1', 1") ist.

8. Vorrichtung (1, 1', 1") nach Anspruch 7 oder Verfahren (2) nach Anspruch 7,
wobei der Schlitz mit der TDMA-Schlitz-Dauer weniger als 150 ms und vorzugsweise 135 ms umfasst.

9. Vorrichtung (1, 1', 1") nach einem der Ansprüche 1, 2 und 5 bis 8 oder Verfahren (2) nach einem der Ansprüche 3 bis 8,
wobei die erkannte Betätigung eine Betätigung eines Push-to-Talk-Knopfes, PPT-Knopfes, der SDR-Vorrichtung (1, 1', 1") umfasst.

10. Vorrichtung (1, 1', 1") nach einem der Ansprüche 1, 2 und 5 bis 9 oder Verfahren (2) nach einem der Ansprüche 3 bis 9,
wobei eine Menge an TDMA-Schlitzen in der Vielzahl einer maximalen Hop-Anzahl für eine Kommunikation im MANET entspricht.

11. Vorrichtung (1, 1', 1") nach Anspruch 10 oder Verfahren (2) nach Anspruch 10,
wobei die maximale Hop-Anzahl für die Kommunikation im MANET zwei Hops umfasst.

## Revendications

1. Radio définie par logiciel, SDR (1 ,1', 1") pour un réseau mobile adéquat, MANET, le MANET comprenant
une pluralité de canaux d'accès multiple par répartition en fréquence, FDMA, dont l'un est dédié à un trafic sensible au délai et comprenant une pluralité périodiquement récurrente de créneaux d'accès multiple par répartition dans le temps, TDMA, de durée égale ;
le dispositif SDR (1 ,1', 1") comprenant
un codeur (11) configuré pour
- coder le trafic sensible au retard conformément à un débit binaire de codec maximal ;
un adaptateur (12) configuré pour
- mettre en mémoire tampon le trafic codé conformément à une durée maximale correspondant à la durée du créneau TDMA ;
un émetteur-récepteur (13) configuré pour
- transmettre le trafic mis en mémoire tampon dans un premier créneau de la pluralité de créneaux TDMA ; et
un processeur (14) configuré pour
- détecter un actionnement par un utilisateur du dispositif de radio logicielle, SDR (1 ,1', 1") ;
- faire fonctionner le codeur, l'adaptateur et l'émetteur-récepteur en réponse à l'actionnement détecté ; et
- adapter un débit de données de l'émetteur-récepteur en fonction d'une quantité du trafic mis en mémoire tampon.

2. Dispositif (1, 1', 1") selon la revendication 1,
l'émetteur-récepteur (13) est en outre configuré pour
- recevoir un trafic transmis dans un créneau particulier de la pluralité de créneaux TDMA ; et
- transmettre le trafic reçu dans un autre intervalle de temps de la pluralité d'intervalles de temps TDMA succédant immédiatement à l'intervalle de temps particulier ; et
le processeur (14) est en outre configuré pour
- décrémenter un compteur de durée de vie, TTL, inclus dans le trafic reçu.

3. Procédé (2) de fonctionnement d'un dispositif de radio logicielle, SDR (1 ,1 ', 1") pour un MANET, le MANET comprenant
une pluralité de canaux d'accès multiple par répartition en fréquence, FDMA, dont l'un est dédié au trafic sensible au retard et comprenant une pluralité périodiquement récurrente d'intervalles de temps d'accès multiple par répartition dans le temps, TDMA, de durée égale ;
le procédé (2) comprenant :
- la détection (21) d'un actionnement par un utilisateur du dispositif SDR (1 ,1', 1") ;
- en réponse à l'actionnement détecté, le codage (22) d'un trafic sensible au délai conformément à un débit binaire maximal de codec ;
- la mise en mémoire tampon (23) du trafic codé conformément à une durée maximale correspondant à la durée du créneau TDMA ;
- l'adaptation (24) d'un débit de données de l'émetteur-récepteur en fonction d'une quantité du trafic mis en mémoire tampon ; et
- la transmission (25) du trafic mis en mémoire tampon dans un premier créneau de la pluralité de créneaux TDMA.

4. Procédé (2) selon la revendication 3, comprenant en outre
- la réception (26) de trafic dans un créneau particulier de la pluralité de créneaux TDMA ;
- la décrémentation (27) d'un compteur de durée de vie, TTL, inclus dans le trafic reçu ; et
- la transmission (28) du trafic reçu dans un intervalle de temps supplémentaire de la pluralité d'intervalles de temps TDMA succédant immédiatement à l'intervalle de temps particulier.

5. Dispositif (1, 1', 1") selon la revendication 2 ou procédé (2) selon la revendication 4,
le créneau particulier comprenant le premier créneau de la pluralité de créneaux TDMA ; et
l'intervalle supplémentaire comprenant un deuxième intervalle de la pluralité d'intervalles TDMA.

6. Dispositif (1 ,1', 1") selon l'une quelconque des revendications 1, 2 et 5, ou procédé (2) selon l'une quelconque des revendications 3 à 5,
le trafic sensible au délai comprenant une expression vocale codée.

7. Dispositif (1, 1', 1") selon la revendication 6 ou procédé (2) selon la revendication 6,
la durée de l'intervalle de temps TDMA étant conforme à une sortie continue de l'expression vocale au niveau d'un dispositif SDR de réception (1 ,1', 1").

8. Dispositif (1, 1', 1") selon la revendication 7 ou procédé (2) selon la revendication 7,
la tranche de durée de tranche TDMA comprenant moins de 150 ms, et de préférence 135 ms.

9. Dispositif (1 ,1', 1") selon l'une quelconque des revendications 1, 2 et 5 à 8, ou procédé (2) selon l'une quelconque des revendications 3 à 8,
l'actionnement détecté comprenant un actionnement d'un bouton push-to-talk, PPT, du dispositif SDR (1 ,1', 1").

10. Dispositif (1 ,1', 1") selon l'une quelconque des revendications 1, 2 et 5 à 9, ou procédé (2) selon l'une quelconque des revendications 3 à 9,
une quantité de créneaux TDMA dans la pluralité correspondant à un nombre maximal de sauts pour une communication sur le MANET.

11. Dispositif (1, 1', 1") selon la revendication 10 ou procédé (2) selon la revendication 10,
le nombre maximal de sauts pour la communication sur le MANET comprenant deux sauts.
